# EUROPÄISCHE PATENTANMELDUNG

(11) **EP 1 223 447 A1**
(43) Veröffentlichungstag der Anmeldung: **17.07.2002**
(21) Anmeldenummer: 01100830.7
(22) Anmeldetag: 15.01.2001
(51) Int. Cl.: G02B 6/44

(54) **Kabelelement mit Lichtwellenleiter**

(71) Anmelder: SIEMENS AKTIENGESELLSCHAFT, 80333 München (DE)
(72) Erfinder: Höfner, Roland, 96328 Küps (DE); Menke, Peter, 91362 Pretzfeld (DE)

(57) **Zusammenfassung**

Zur Übertragung von Informationen über eine elektrische Potentialdifferenz hinweg ist wenigstens ein Lichtwellenleiter (11) wendelförmig von mindestens einem Stabilisierungselement (15) umgeben und innerhalb einer isolierenden Hülle (30) angeordnet. Dadurch ist sowohl die Flexibilität als auch die Stabilität der Lichtwellenleiteranordnung (5) sichergestellt. Die erfindungsgemäße Lichtwellenleiteranordnung (5) kann z.B. nachträglich leicht innerhalb bestehender und festliegender Kabelwege von Anlagen (z.B. Mittelspannungs- oder Hochspannungsanlagen) verlegt werden.

## Beschreibung

Die Erfindung betrifft eine Lichtwellenleiteranordnung mit wenigstens einem Lichtwellenleiter zur Übertragung von Informationen über eine elektrische Potentialdifferenz hinweg. Zur Erhöhung der Stabilität, besonders der Zugfestigkeit, ist dabei der wenigstens eine Lichtwellenleiter zusammen mit mindestens einem Stabilisierungselement innerhalb einer isolierenden Hülle angeordnet.

Derartige Lichtwellenleiteranordnungen sind beispielsweise in der Hochspannungstechnik bekannt.

Aus der US 3,485,940 ist eine Lichtwellenleiteranordnung entnehmbar, bei der Lichtwellenleiter im Inneren einer starren Isolatorsäule angeordnet sind.

Aus der EP 0 146 845 A2 ist ein Hochspannungsisolator bekannt, der einen starren, glasfaserverstärkten Strunk und einen in einer Zwischenschicht verlegten Lichtwellenleiter aufweist.

Weiterhin ist aus der EP 0 265 737 A1 eine Lichtwellenleiteranordnung bei einem Hochspannungsisolator bekannt, wobei der Lichtwellenleiter in Wendelform in ein starres Isolierrohr eingebracht ist.

Diesen bekannten Lösungen ist gemeinsam, dass ein Lichtwellenleiter zur Überbrückung einer Potentialdifferenz innerhalb eines starren Isolators verlegt wird.

Derartige Anordnungen sind insofern nachteilig, als dass sie wegen der Starrheit des Isolators und damit der gesamten Lichtwellenleiteranordnung praktisch keine Flexibilität aufweisen, um ein einfaches Verlegen des Kabels außerhalb des Isolators zu gewährleisten. Besonders nachteilig ist dies, wenn eine bestehende Einrichtung, beispielsweise eine Mittelspannungs- oder eine Hochspannungsanlage, mit einer derartigen Lichtwellenleiteranordnung nachgerüstet werden soll. Durch die statischen Erfordernisse derartiger Anlagen sind die Kabelwege für die Lichtwellenleiteranordnung praktisch vorab festgelegt und die Verlegung der unflexiblen Lichtwellenleiteranordnung entlang dieser vorgegebenen Kabelwege ist nahezu unmöglich oder zumindest sehr aufwendig.

Der Erfindung liegt daher die Aufgabe zugrunde, eine Lichtwellenleiteranordnung der eingangs genannten Art zu schaffen, welche Auswahlmöglichkeiten bei der Positionierung der Lichtwellenleiteranordnung zulässt, um auch nachträglich das Verlegen eines Lichtwellenleiters in einer bestehenden Anlage kostengünstig und konstruktiv einfach zu ermöglichen.

Die Aufgabe wird erfindungsgemäß gelöst durch eine Lichtwellenleiteranordnung mit wenigstens einem Lichtwellenleiter zur Übertragung von Informationen über eine elektrische Potentialdifferenz hinweg, wobei der wenigstens einen Lichtwellenleiter zusammen mit mindestens einem Stabilisierungselement innerhalb einer isolierenden Hülle angeordnet ist, und bei der das mindestens eine Stabilisierungselement schraubenförmig um den wenigstens einen Lichtwellenleiter angeordnet ist.

Die Verwendung eines schraubenförmig um die Lichtwellenleiter enthaltende Bündelader oder um den Lichtwellenleiter angeordneten Stabilisierungselements gewährleistet gleichzeitig sowohl die Flexibilität als auch die Stabilität der Lichtwellenleiteranordnung.

Im Gegensatz zu einem starren Isolator, welcher im Stand der Technik die Stabilität der Lichtwellenleiteranordnung sicherstellt, ist das schraubenförmig um den wenigstens einen Lichtwellenleiter angeordnete Stabilisierungselement wesentlich flexibler, da die Bündelader oder der Lichtwellenleiter selbst nicht von einem geschlossenen durch das Stabilisierungselement gebildeten starren Mantel umgeben ist, sondern nur von einem gewendelten Stabilisierungselement, welches im Vergleich zum Vollmantel nur einen Bruchteil dessen Mantelfläche einnimmt. Die benötigten Kräfte zum Verformen dieser Anordnung beim Verlegen sind daher im Vergleich zu den erforderlichen Kräften bei Anordnungen aus dem Stand der Technik reduziert und die Flexibilität ist daher im Vergleich zu den bekannten Lösungen erhöht.

In vorteilhafter Ausgestaltung der Erfindung schließt das mindestens eine Stabilisierungselement mit dem wenigstens einen Lichtwellenleiter einen Winkel zwischen 0,5° und 53° ein.

Die Realisierung derartiger Winkel bietet einen guten Kompromiss zwischen Flexibilität der erfindungsgemäßen Lichtwellenleiteranordnung und deren Stabilität in Bezug auf Zug- und/oder Biegebeanspruchungen.

Um so größer der Winkel gewählt wird, desto stabiler in Bezug auf Biege- und/oder Zugbeanspruchung wird die Anordnung, da die Fläche, welche das schraubenförmig um den Lichtwellenleiter angeordnete Stabilisierungselement auf einem gedachten, den wenigstens einen Lichtwellenleiter umschließenden Vollmantel einnimmt, größer wird und die Flexibilität der Anordnung dadurch abnimmt. Weiterhin ist es vorteilhaft die Hülle, welche die Anordnung umgibt, mit Silikon auszuführen, da darauf bei Herstellung eines Isolators direkt ohne weitere Haftvermittler das Silikon das zur Herstellung von Isolatoren benötigt wird, direkt aufgegossen werden kann.

Aus dem bevorzugten Winkelbereich kann je nach den Anforderungen an Stabilität und Flexibilität des aktuellen Anwendungsfalls ein geeigneter Winkel gewählt werden.

In weiterer vorteilhaft Ausgestaltung der Erfindung ist das wenigstens eine Stabilisierungselement ein Stab, welcher schraubenförmig um die wenigstens eine Bündelader oder den Lichtwellenleiter selbst gewickelt ist.

Die Verwendung eines Stabes als Stabilisierungselement bietet den Vorteil, dass dieser wegen seiner im Vergleich zu seiner Längenausdehnung geringen Dicke leicht verformbar ist, um die erfindungsgemäß vorgesehene schraubenförmige Ausgestaltung des Stabilisierungselements zu realisieren.

Vorteilhaft umgeben mehrere Stäbe den Lichtwellenleiter in Art eines Käfigs und der Käfig ist als ganzes verdrillt. Die Stäbe bilden also eine mehrgängige "Schraube" mit dem oder den Lichtwellenleiten im Inneren der "Schraube".

Die Verwendung von mehreren Stäben hat gegenüber der Verwendung von einem Stab den Vorteil, dass das gesamte Volumen zur Stabilisierung und damit die Stabilität selbst vergrößert ist bzw. gegenüber der Verwendung eines zum Lichtwellenleiter koaxialen Hohlrohres. Es ist nicht erforderlich, zur Erhöhung des genannten Volumens den Winkel zwischen den Stabilisierungselementen und dem Lichtwellenleiter zu vergrößern, was zu einem erhöhten Aufwand bei der schraubenförmigen Ausgestaltung der Stabilisierungselemente führen würde. Die Anordnung wird also durch die Verwendung von mehreren Stäben stabiler im Vergleich zur Anordnung mit nur einem Stab.

Dadurch, dass die Stäbe in Art eines Käfigs um die wenigstens eine Bündelader bzw. den Lichtwellenleiter selbst gewickelt sind, bietet die erfindungsgemäße Anordnung gegenüber jeder Angriffsrichtung von Kräften, welche auf die Anordnung einwirken, die gleiche Stabilität.

Der erfindungsgemäß durch die Stabilisierungsstäbe gebildete Käfig zeichnet sich bevorzugt dadurch aus, dass der Abstand zwischen jeweils zwei benachbarten, schraubenförmig um den mindestens einen Lichtwellenleiter gewickelten Stabilisierungsstäben gleich ist - insbesondere gleich Null, da so auf den Umfang wirkende Querkräfte nicht in die Bündelader und somit auf den Lichtwellenleiter übertragen werden können - was zu einer gleichmäßigen Verteilung der Stabilisierungselemente entlang des Umfangs eines gedachten Vollmantels um den wenigstens einen Lichtwellenleiter führt. Dadurch ist die Stabilität, welche diese Anordnung gegenüber am Umfang der Anordnung angreifenden Kräften bietet, unabhängig vom Angriffspunkt und der Richtung derartig angreifender Kräfte.

Weiterhin ist es vorteilhaft, dass das mindestens eine Stabilisierungselement aus glasfaserverstärktem Kunststoff besteht; geeignet sind hierfür auch Aramid oder ähnliche Werkstoffe.

Glasfaserverstärkter Kunststoff, abgekürzt GfK, ist ein bekannter Werkstoff, welcher die Vorteile einer hohen Stabilität in Bezug auf Zug- und/oder Biegebeanspruchung mit einem verhältnismäßig geringem Gewicht verbindet. Solche Kunststoffe besitzen in der Regel auch eine sehr gute elektrische Isolationsfähigkeit.

Eine derartig ausgebildete erfindungsgemäße Anordnung bietet daher u. A. den Vorteil eines geringen Gewichts, welches den Transport und das Verlegen der Anordnung erheblich vereinfacht.

Ein weiterer Vorteil ist, das bei den als Käfig um die Bündelader angeordneten GfK-Stäben auf einfache Weise Armaturen aufgebracht werden können.

Im Folgenden werden zwei Ausführungsbeispiele der Erfindung dargestellt:

Es zeigen:
- FIG 1: einen Querschnitt durch eine erfindungsgemäße Lichtwellenleiteranordnung, bei welcher die Stabilisierungselemente als zwei Schichten von Flachstäben ausgebildet sind,
- FIG 2: einen Querschnitt durch eine erfindungsgemäße Lichtwellenleiteranordnung, bei welcher die Stabilisierungselemente als Rundstäbe ausgebildet sind, und
- FIG 3: eine Seitenansicht einer erfindungsgemäßen Lichtwellenleiteranordnung nach FIG 2, wobei der äußere Mantel bei der Darstellung weggelassen wurde.

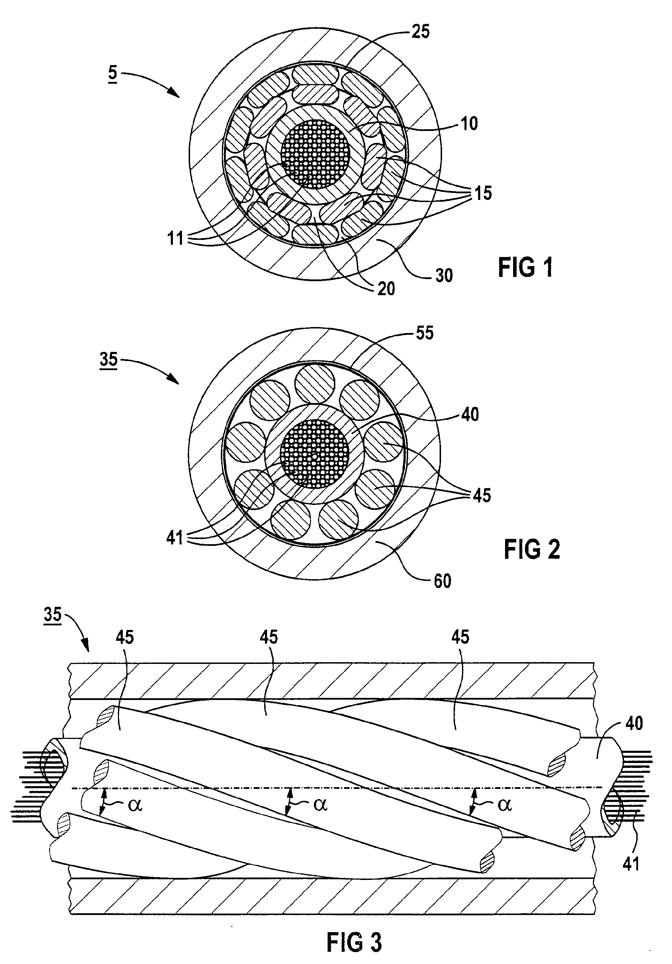

Die erfindungsgemäße Lichtwellenleiteranordnung 5 der FIG 1 umfasst eine zentrale Bündelader 10, welche die einzelnen Lichtwellenleiter 11 aufnimmt. Zur Erhöhung der Stabilität der Anordnung ist die Bündelader 10 entlang ihres Umfangs von Stabilisierungselementen 15 umgeben, welche im vorliegenden Ausführungsbeispiel als Flachstäbe ausgebildet sind. Diese Flachstäbe können z.B. aus glasfaserverstärktem Kunststoff (GfK) bestehen.

Die Stabilisierungselemente 15 können in einer oder auch wie im vorliegenden Ausführungsbeispiel in mehreren Schichten um die Lichtwellenleiter 11 oder die Bündelader 10 angeordnet sein.

Um die Flexibilität der Anordnung zu erhöhen, kann zwischen der Bündelader und den Stabilisierungselementen eine dauerelastische Substanz angeordnet sein. So können sich die Stabilisierungselemente unter Biegebelastung, wie sie z.B. beim Verlegen der Anordnung auftritt, auf dieser dauerelastischen Schicht bewegen und somit unterschiedliche Biegeradien ausgleichen ohne dass sich die Anordnung unerwünscht verformt.

In den Zwischenräumen 20 zwischen den Stabilisierungselementen 15 befindet sich ein Gel, welches dämpfend auf eventuell auftretende Schwingungen, z.B. bei Biegebelastung, wirkt und damit die Belastung der Anordnung in solchen Fällen herabsetzt.

Die äußerste Schicht von Stabilisierungselementen 15 ist von einer Folie 25 umgeben, welche bei der Herstellung der Lichtwellenleiteranordnung 5 die Lage der Stabilisierungselemente 15 sichert, bevor die Anordnung 5 von einem Kabelmantel, der äußeren Hülle 30 - vorzugsweise aus Silikon bestehend - umgeben wird.

Die Stabilisierungselemente 15 verlaufen nicht parallel zu den Lichtwellenleitern 11, sondern sie sind wendelförmig um diese angeordnet. Wird also der Querschnitt durch die Lichtwellenleiteranordnung 5 nach FIG 1 an eine andere Stelle gelegt, so sind die Stabilisierungselemente 15 gegenüber der Darstellung in FIG 1 rotatorisch versetzt darzustellen, also an einer anderen Stelle am Umfang der Bündelader. Diese Tatsache ist aus FIG 1 nicht näher ersichtlich.

FIG 2 zeigt eine Lichtwellenleiteranordnung 35, welche eine Bündelader 40 umfasst, die Lichtwellenleiter 41 aufnimmt.

Die Bündelader 40 ist entlang ihres Umfangs von Stabilisierungselementen 45 umgeben, welche im vorliegenden Ausführungsbeispiels als Rundstäbe ausgebildet sind. Diese Stäbe können z.B. aus glasfaserverstärktem Kunststoff GfK bestehen.

Die Stabilisierungselemente 45 bilden um die Bündelader 40 einen Käfig derart, dass der Abstand zwischen zwei benachbarten Stabilisierungselementen 45 jeweils gleich groß ist; dabei soll ein Abstand gleich Null ebenfalls zugelassen sein.

Die Stabilisierungselemente 45 verlaufen nicht parallel zu den Lichtwellenleitern 41, sondern sie sind schraubenförmig um diese angeordnet. Dies bedeutet, dass, wenn die Lichtwellenleiteranordnung 35 nach FIG 2 an einer anderen Stelle quer geschnitten würde, die Stabilisierungselemente 15 im Vergleich zur Darstellung in FIG 2 verdreht, also an einer anderen Stelle am Umfang der Bündelader dargestellt wären. Diese Tatsache ist aus FIG 2 nicht näher ersichtlich.

Die Stabilisierungselemente sind von einer Folie 55 umgeben, welche der Sicherung der Lage der Stabilisierungselemente 45 dient, bevor die Hülle 60 als Kabelmantel bei einer Herstellung der Lichtwellenleiteranordnung 35 umspritzt bzw. extrudiert wird.

In FIG 3 ist eine Seitenansicht der erfindungsgemäßen Lichtwellenleiteranordnung 35 aus FIG 2 dargestellt, wobei die Hülle 60 weggelassen wurde, um die Anordnung der Stabilisierungselemente 45, welche im vorliegenden Ausführungsbeispiel als Stäbe ausgebildet sind, erkennen zu können.

Die Stabilisierungselemente 45 sind schraubenförmig um die Bündelader 40, welche die nicht näher dargestellten Lichtwellenleiter aufnimmt, angeordnet und bilden dabei mit der Bündelader 40 und damit mit den in dieser verlaufenden Lichtwellenleitern einen Winkel α. Besonders vorteilhaft liegt dieser Winkel zwischen 0,5° und 53°.

Die erfindungsgemäßen Lichtwellenleiteranordnungen 5, 35 sind vorteilhaft mit Silikonschirmen umgossen. Dadurch ist eine gute Isolation der erfindungsgemäßen Anordnung, welche bevorzugt von Hochspannungspotenzial zu Erdpotenzial verlegt ist, gewährleistet. Die Art und Gestaltung der Silikonschirme kann nach dem Stand der Technik ausgeführt sein.

## Patentansprüche

1. Lichtwellenleiteranordnung (5) mit wenigstens einem Lichtwellenleiter (11) zur Übertragung von Informationen über eine elektrische Potenzialdifferenz hinweg, wobei der wenigstens eine Lichtwellenleiter (11) zusammen mit mindestens einem Stabilisierungselement (15) innerhalb einer isolierenden Hülle angeordnet (30) ist,
**dadurch gekennzeichnet, dass**
das mindestens eine Stabilisierungselement (15) wendelförmig um den wenigstens einen Lichtwellenleiter (11) angeordnet ist.

2. Lichtwellenleiteranordnung nach Anspruch 1,
**dadurch gekennzeichnet, dass**
das mindestens eine Stabilisierungselement (15) mit dem wenigstens einen Lichtwellenleiter (11) einen Winkel (α) zwischen 0,5° und 53° einschließt.

3. Lichtwellenleiteranordnung nach einem der Ansprüche 1 oder 2,
**dadurch gekennzeichnet, dass**
das wenigstens eine Stabilisierungselement (15) ein Stab ist, welcher wendelförmig um den wenigstens einen Lichtwellenleiter (11) gewickelt ist.

4. Lichtwellenleiteranordnung nach Anspruch 3,
**dadurch gekennzeichnet, dass**
mehrere Stäbe wendelförmig in Art eines Käfigs um den wenigstens einen Lichtwellenleiter (11) gewickelt sind.

5. Lichtwellenleiteranordnung nach einem der Ansprüche 1 bis 4,
**dadurch gekennzeichnet, dass**
das mindestens eine Stabilisierungselement (15) aus glasfaserverstärktem Kunststoff besteht.
